# EUROPEAN PATENT APPLICATION

(11) **EP 1 519 548 A1**
(43) Date of publication of application: **30.03.2005**
(21) Application number: 04255624.1
(22) Date of filing: 16.09.2004
(51) Int. Cl.: H04M 3/428

(54) **Notification to the calling party when the called party becomes available**

(30) Priority: 29.09.2003 US 674142
(71) Applicant: LUCENT TECHNOLOGIES INC., Murray Hill, New Jersey 07974-0636 (US)
(72) Inventor: Fernandez, Christopher Lawrence, Aurora, Illinois 60504 (US); Martin, Ronald Bruce, Carol Stream, Illinois 60188 (US)
(74) Representative: Watts, Christopher Malcolm Kelway, Dr.

(57) **Abstract**

The present invention provides a method for notifying a first user that a second user has returned to a call. A first user and a second user are engaged in a call on a communication path. The second user suspends the call, such as by placing the first user on hold. The communication system monitors that communication path to determine when the second user has activity on the communication path. The activity can comprise voice or data traffic. The communication system notifies the first user that the second user has returned to the call. The notification can occur by sending an audible signal to the first user, a visual indicator to the first user, a vibrating signal, or a paging signal to the first user. The call is then resumed.

## Description

### FIELD OF THE INVENTION

The present invention relates generally to communication systems, and more particularly to communication systems that allow users to be placed on hold.

### BACKGROUND OF THE INVENTION

Telephonic communication systems allow communication between a first user and a second user. Features have arisen that allow a user to place the second user "on hold", or in a state where the parties are, temporarily, not sending information to each other on the call.

In current communication systems, the party that is placed on hold becomes aware that the other party has returned to the call when the other party begins speaking again. The party placed on hold has to continue to monitor the communication channel in order to become aware that the other party has returned to the call. This typically requires the user to keep the phone to their ear or to place the phone on speaker mode.

If the party on hold decides to make a call to a different party while on hold, or receives another call while on hold utilizing the call-waiting feature, the party can place the first call on hold and make or take the second call. However, there is no way to know when the first party returns to the first call. In this scenario, the first party returns to the call and the other party is not currently on the call. The first party does not know if the second party has gone to another call, walked away from the phone, or hung up.

Therefore, a need exists for a method that allows a party placed on hold to know that the other party has returned to the call.

### BRIEF SUMMARY OF THE INVENTION

The present invention provides a method for notifying a user that a party has returned to a communication session. A specific example of an exemplary embodiment of the present invention is going on hold and having to wait for the other party to return to the call. The present invention provides a method to notify the party on hold when the other party returns to the call.

In an exemplary embodiment of the present invention, a first user and a second user are involved in a call on a communication path. The call is suspended, for example by the second user placing the first user on hold.

The communication system monitors the communication path to determine when the second user has activity on the communication path. The activity can comprise voice traffic on the communication path, a data packet on the communication path, or any other indication that the second user has resumed participation in the call.

The communication system then notifies the first user that the second user has returned to the call. Notifying can occur by sending an audible signal, such as a ring signal or other tone, to the first user. In a further exemplary embodiment, notifying occurs by displaying a visual indicator on the first phone. In a further exemplary embodiment, notifying occurs by vibrating the first phone. In a further exemplary embodiment, notifying occurs by sending a paging signal to the first user. The paging signal can be sent to the first user on the first phone, or to another communication unit associated with the first user.

The notifying of the first user can occur on a second communication path that is different that the original communication path. This can include a secondary line to the first user. The communication system resumes the call.

In one exemplary embodiment of the present invention, a first user is placed on hold by a second user in a call on a communication path between the first user and the second user. The first user engages in a second call with a third user, thereby placing the second user on hold. The communication path is monitored to determine when the second user has activity on the communication path, such as voice or data activity. The first user is notified that the second user has returned to the call while still engaged in the second call with the third user.

### BRIEF DESCRIPTION OF THE SEVERAL VIEWS OF THE DRAWINGS

FIG. 1 depicts a communication system in accordance with an exemplary embodiment of the present invention.
FIG. 2 depicts a flow chart of a method for notifying a first user that a second user has returned to a call in accordance with an exemplary embodiment of the present invention.

### DETAILED DESCRIPTION OF THE INVENTION

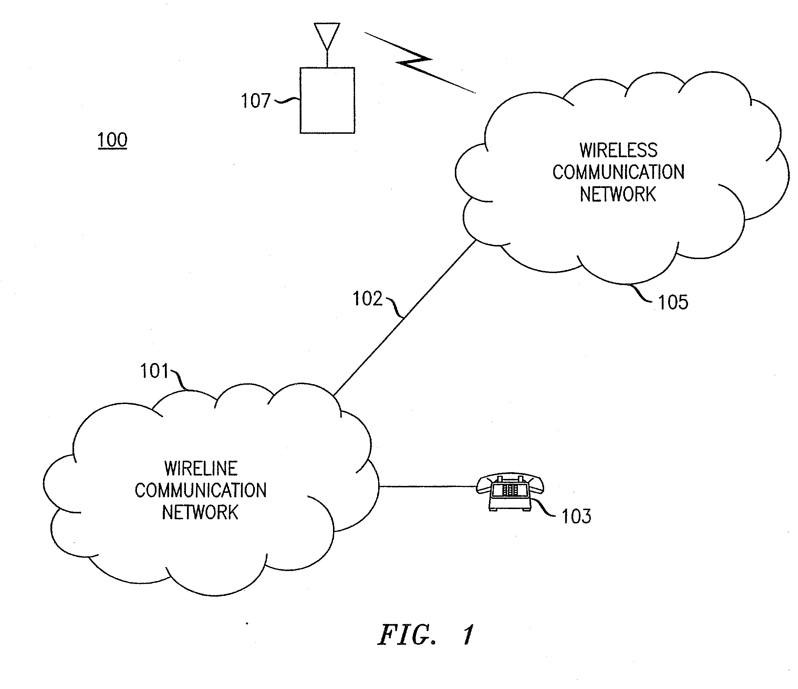

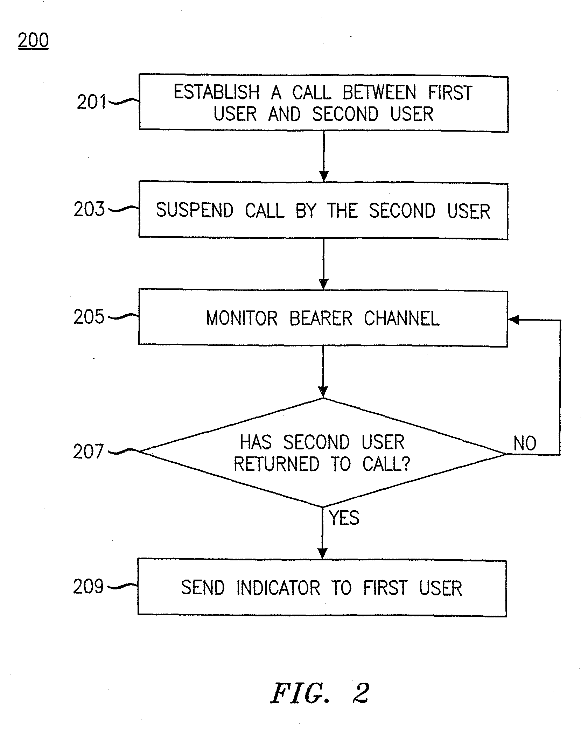

The present invention can be better understood with reference to FIGs. 1 and 2. FIG. 1 depicts a communication system 100 that includes a wireline communication network 101 and a wireless communication network 105 in accordance with an exemplary embodiment of the present invention. Wireline communication network 101 and wireless communication network 105 are coupled via link 102. It should be understood that link 102 may pass through various and additional pieces of network equipment, which is understood by those versed in the telecommunications field.

Wireline communication network 101 is preferably a Public Switched Telephone Network (PSTN). Wireline phone 103 is a phone connected to wireline communication network 101.

Wireless communication network 105 comprises a communication network that is capable of handling wireless telephone calls to multiple wireless users, such as wireless unit 107. Wireless communication network 105 can be any wireless network using any functional network or over-the-air protocol.

It should be understood that the present invention is suitable in a variety of network configurations. For example, the present invention is suitable in wireline, wireless, and combination networks. The first user utilizing the first phone can be either a wireless unit or a wireline unit. Similarly, the second user utilizing the second phone can be either a wireless unit or a wireline unit. In the exemplary embodiment depicted in FIG. 1, the communication unit placing a call on hold is depicted as a wireless unit, while the party placed on hold is depicted as a wireline unit. It should be understood that the party placing a call on hold can be either a wireline or wireless unit, and the party placed on hold can be either a wireline or wireless unit.

FIG. 2 depicts a flow chart 200 of a method for notifying a first user that a second user has returned to a call in accordance with an exemplary embodiment of the present invention.

A call is established (201) between a first user utilizing first unit 103 and a second user utilizing second unit 107. The call is established on a communication path between first unit 103 and second unit 107. The call can be initiated by either first unit 103 or second unit 107. The communication path comprises a control path and a bearer path. Although first unit 103 is depicted as a wireline unit and second unit 107 is depicted as a wireless unit, the first user and the second user can be wireline, wireless, packet-based, or any other communication unit that is able to communicate on a call path with another communication unit. First unit 103 can initiate the call with second unit 107, or second unit 107 can initiate the call with first unit 103.

Second user 107 suspends (203) the call. In an exemplary embodiment of the present invention, second user 107 suspends the call by placing first user 103 on hold. In a further exemplary embodiment, second user 107 suspends the call by placing the unit down. In a further exemplary embodiment, second user 107 suspends the call by answering an incoming call that is indicated by the call-waiting feature.

The communication system monitors (205) the bearer channel. The communication system determines (207) whether the second user has returned to the call. If not, the communication system returns to step 205 and continues to monitor the call.

If the second user has returned to the call, the communication system sends (209) an indicator to the first user. In an exemplary embodiment, the communication system sends an audible signal to the first user. The audible signal can comprise a signal to the first phone to generate a ring signal or distinctive ring tone to the first user. In a further exemplary embodiment, the communication system sends a visual indicator to the first phone. This is preferably accomplished by sending a signal to the first phone to display a visual indicator on the first phone. In a further exemplary embodiment, the communication system notifies the first user by sending a signal to the first phone instructing the first phone to vibrate.

The communication system can also send an indicator notifying the first user that the second user has returned to the call by sending a paging signal to the first user. The paging signal can be sent to the first unit, or to a separate device associated with the first user. For example, the separate device can be a phone, pager, or PDA that the first user uses.

The present invention thereby provides a method for notifying a first user that a second user has returned to a call. By notifying the first user that the second user has returned to the call, the first user is provided the opportunity to engage in other activities. For example, the first user can answer a call from another user or make a call to another user on a separate phone line. By providing notification to the user on hold, the present invention allows the user to engage in other activities without having to continue to listen to the suspended call in anticipation of the return of the second user.

While this invention has been described in terms of certain examples thereof, it is not intended that it be limited to the above description, but rather only to the extent set forth in the claims that follow.

## Claims

1. A method for notifying a first user that a second user has returned to a call, the method comprising:
suspending a call on a communication path between a first user and a second user by the second user;
monitoring the communication path to determine when the second user has activity on the communication path; and
notifying the first user that the second user has returned to the call.

2. A method for notifying a first user that a second user has returned to a call in accordance with claim 1, wherein the step of monitoring comprises detecting activity on the communication path.

3. A method for notifying a first user that a second user has returned to a call in accordance with claim 2, wherein the step of detecting activity on the communication path comprises detecting voice traffic on the communication path.

4. A method for notifying a first user that a second user has returned to a call in accordance with claim 2, wherein the step of detecting activity on the communication path comprises detecting a data packet on the communication path.

5. A method for notifying a first user that a second user has returned to a call in accordance with claim 1, wherein the step of notifying the first user that the second user has returned to the call comprises sending an audible signal to the first user.

6. A method for notifying a first user that a second user has returned to a call in accordance with claim 1, wherein the step of notifying the first user that the second user has returned to the call comprises displaying a visual indicator on the first phone.

7. A method for notifying a first user that a second user has returned to a call in accordance with claim 1, wherein the step of notifying the first user that the second user has returned to the call comprises vibrating the first phone.

8. A method for notifying a first user that a second user has returned to a call in accordance with claim 1, wherein the step of notifying the first user that the second user has returned to the call comprises sending a paging signal to the first user.

9. A method for notifying a first user that a second user has returned to a call in accordance with claim 1, wherein the step of notifying the first user that the second user has returned to the call comprises sending a paging signal to a separate device.

10. A method for notifying a first user that a second user has returned to a call in accordance with claim 1, wherein the step of notifying the first user that the second user has returned to the call comprises notifying the first user comprises notifying the first user on a second communication path that is different that the communication path.
